# EUROPÄISCHE PATENTSCHRIFT

(11) **EP 2 961 551 B1**
(45) Veröffentlichungstag und Bekanntmachung des Hinweises auf die Patenterteilung: **14.12.2016**
(21) Anmeldenummer: 14706632.8
(22) Anmeldetag: 26.02.2014
(51) Int. Cl.: B23B 31/117, B23B 31/00

(54) **WERKZEUGKOPF MIT SCHRUMPFUTTER**
TOOL-HEAD WITH SHRINK-FIT CHUCK
TÊTE D'OUTIL AVEC MANDRIN DE FRETTAGE

(30) Priorität: 01.03.2013 DE 102013203558
(43) Veröffentlichungstag der Anmeldung: 06.01.2016
(73) Patentinhaber: Bilz Werkzeugfabrik GmbH & Co. KG, 73760 Ostfildern (DE)
(72) Erfinder: VOSS, Michael, 71229 Leonberg (DE)
(74) Vertreter: Pfiz, Thomas
(86) Internationale Anmeldenummer: PCT/EP2014/053728
(87) Internationale Veröffentlichungsnummer: WO 2014/131797

(56) Entgegenhaltungen:
- EP-A1- 1 155 765
- WO-A1-2010/023412
- WO-A1-2011/138360
- WO-A1-2013/127606
- DE-A1- 10 244 759
- DE-U1-202007 003 045

## Beschreibung

Die Erfindung betrifft einen Werkzeugkopf mit einem rotierend antreibbaren, eine axiale Aufnahmebohrung aufweisenden Schrumpffutter und einem mit seinem zylindrischen Werkzeugschaft in die am vorderen Stirnende des Schrumpffutters offene Aufnahmebohrung einsetzbaren und darin durch thermisches Schrumpfen des Schrumpffutters fixierbaren Werkzeug, insbesondere Rotationswerkzeug wie Bohrer oder Fräser.

Aus der WO 2011/138360, die einen Werkzeugkopf gemäß dem Oberbegriff des Anspruchs 1 offenbart, ist ein Werkzeughalter mit einem Schrumpffutter und einer Düsenvorrichtung zum Beaufschlagen eines Rotationswerkzeugs mit einem flüssigen und/oder gasförmigen Medium bekannt. Die Düsenvorrichtung besteht dort aus einer Hülse, die außenseitig auf den Futterkörper aufgeschraubt wird und an ihrem vorderen Ende mit einem Düsenring versehen ist. Vor dem Schrumpfvorgang muss die Düsenvorrichtung abgenommen werden, was einen zusätzlichen Handhabungsaufwand bedingt.

Ausgehend hiervon liegt der Erfindung die Aufgabe zugrunde, die im Stand der Technik bekannten Vorrichtungen weiter zu verbessern und mit einfachen Maßnahmen und reduziertem Handhabungsaufwand eine erhöhte Funktionalität insbesondere hinsichtlich einer Positionierung und Kühlung des Werkzeugs zu ermöglichen, ohne dass aufwändige Maschinenveränderungen oder Einschränkungen des Arbeitsraums in Kauf zu nehmen wären.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, ein einspannbares Funktions- bzw. Zwischenelement mit dem Werkzeugschaft eines Bearbeitungswerkzeugs reversibel zu verbinden. Dementsprechend wird erfindungsgemäß vorgeschlagen, dass das Schrumpffutter an seinem vorderen Stirnabschnitt eine die Aufnahmebohrung radial erweiternde, stirnseitig offene Ringausnehmung aufweist, und dass auf dem Werkzeugschaft ein Funktionsring positioniert ist, wobei im eingeschrumpften Zustand der Werkzeugschaft in der Aufnahmebohrung reibschlüssig fixiert ist und der Funktionsring zumindest teilweise in der Ringausnehmung sitzt. Dadurch ist es möglich, zusammen mit dem Werkzeug ein Funktionselement einzuspannen, das ohne Störkontur in dem Futter aufgenommen wird, wobei die futterseitigen Anpassungen konstruktiv problemlos sind und insbesondere ein induktives Schrumpfen nicht beeinträchtigen. In diesem Zusammenhang wird unter dem Begriff "Ring" allgemein ein - kreisförmig, polygonförmig oder in sonstiger geometrischer Form - umlaufend geschlossener oder weitgehend geschlossener oder zusammengesetzter Körper (Funktionsring) oder entsprechend begrenzter Raum (Ringausnehmung) verstanden.

Vorteilhafterweise steht der Funktionsring an seiner Innenfläche reibschlüssig mit der Mantelfläche des Werkzeugschafts in Eingriff, so dass eine Selbsthaltung erreicht wird und eine Vorpositionierung problemlos möglich ist. Eine weitere Verbesserung in dieser Hinsicht wird dadurch erreicht, dass der Funktionsring im ausgeschrumpften Ausgangszustand abnehmbar auf dem Werkzeugschaft positioniert ist, wobei die axiale Position zur Längeneinstellung des frei überstehenden Vorderabschnitts des Werkzeugs wählbar ist.

Eine weitere vorteilhafte Ausgestaltung sieht vor, dass der Funktionsring im Ausgangszustand ein radiales Übermaß gegenüber der Ringausnehmung aufweist. Auf diese Weise ist auch eine Schrumpfbefestigung des Funktionsrings im Zuge des Einschrumpfens des Werkzeugs möglich.

Um eine vordefinierte Ausrichtung sicherzustellen, ist es auch von Vorteil, wenn der Funktionsring durch eine Formschlussverbindung in einer definierten Winkellage verdrehfest in der Ringausnehmung fixiert ist.

In einer besonders bevorzugten Ausführung ist der Funktionsring als Düsenring mit mindestens einer Düse zum Beaufschlagen des Werkzeugs mit Kühlschmierstoff ausgebildet. Dadurch kann im Zuge des Rotationsvorgangs gezielt Fluid werkzeugseitig zugeführt werden, ohne dass ein großer Bauraum zusätzlich erforderlich wäre.

Um einen mitrotierenden Sprühkegel zu schaffen, ist es von Vorteil, wenn der Funktionsring eine Mehrzahl von in Umfangsrichtung verteilte und in axialer Ringrichtung durchgehende Düsen zur Durchleitung von Kühlschmierstoff aufweist. Eine besondere konstruktive Verbesserung lässt sich dadurch erreichen, dass der Funktionsring axial durchgehende, an seinem Innenmantel seitlich offene Düsenschlitze aufweist, wobei sich die Düsenschlitze in radialer Richtung oder unter einem Winkel schräg dazu nach außen erstrecken.

Zur einfachen Ringverteilung eines Mediums auf die Düsen ist es vorteilhaft, wenn die Ringausnehmung einen durch den Funktionsring nach vorne begrenzten freien Ringraum zum Einleiten und Verteilen von Kühlschmierstoff aufweist. In baulich besonders vorteilhafter Weise lässt sich dies dadurch realisieren, dass die Ringausnehmung als nach vorne sich erweiternde Stufenbohrung ausgebildet ist, wobei der vordere Bohrungsabschnitt den Funktionsring in seiner axialen Ausdehnung vollständig oder zumindest überwiegend aufnimmt.

Zum Anschluss an eine maschinenseitige Kühlschmierstoffversorgung ist es vorteilhaft, wenn das Schrumpffutter einen von einem hinteren, in eine Maschinenspindel einspannbaren Spannabschnitt zu der Ringausnehmung führenden Versorgungskanal für Kühlschmierstoff aufweist. In diesem Zusammenhang ist es auch günstig, wenn das Schrumpffutter in einer den Werkzeugschaft umschließenden Hülsenpartie mindestens eine Längsbohrung zur Durchleitung von Kühlschmierstoff aufweist.

Im Folgenden wird die Erfindung anhand eines in der Zeichnung schematisch dargestellten Ausführungsbeispiels näher erläutert. Es zeigen:
- Fig. 1: einen Werkzeugkopf mit einem Schrumpffutter und einem darin eingesetzten Bohrwerkzeug in Seitenansicht;
- Fig. 2: einen Axialschnitt des Werkzeugkopfs gemäß Fig. 1;
- Fig. 3: eine Stirnansicht des Werkzeugkopfs gemäß Fig. 1;
- Fig. 4: eine Ausschnittsvergrößerung der Fig. 2 im Bereich eines Düsenrings.

Der in der Zeichnung gezeigte Werkzeugkopf besteht im Wesentlichen aus einem Schrumpffutter 10, einem darin eingesetzten Rotationswerkzeug in Form eines Bohrers 12 und einem auf dem Bohrer positionierten, in einer stirnseitigen Ausnehmung des Schrumpffutters aufgenommenen Funktionsring 14.

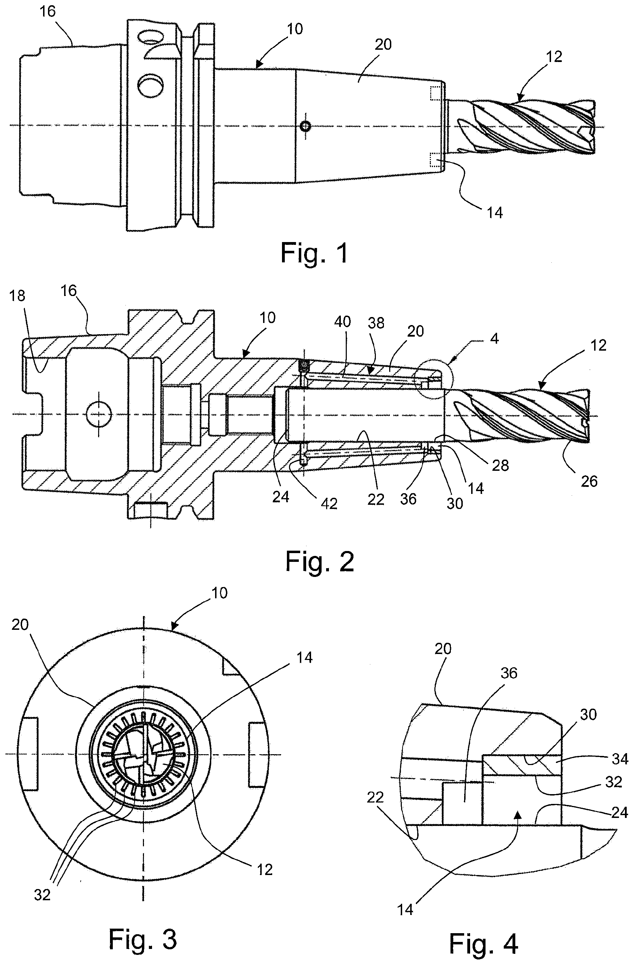

Wie am besten aus Fig. 1 und 2 ersichtlich, besitzt das Schrumpffutter 10 einen Hohlschaftkegel 16 zum Andocken an eine Maschinenspindel. Dessen Hohlraum 18 dient zugleich zur maschinenseitigen Zuführung von Kühlschmierstoff, der über ein Kanalsystem durch den Funktionsring 14 hindurch auf das Rotationswerkzeug 12 zum Kühlen, Schmieren und Freiräumen des Arbeitsbereichs eingedüst werden kann, wie es unten näher erläutert wird.

Der Futterkörper 20 umfasst als Hülsenpartie eine am vorderen Stirnende des Schumpffutters 10 offene Aufnahmebohrung 22, die einen etwas geringeren Nenndurchmesser als der Werkzeugschaft 24 besitzt, so dass dieser in an sich bekannter Weise durch (induktives) Erwärmen des Futterkörpers 20 klemmend einspannbar ist (Fig. 2). Im eingeschrumpften Zustand wird der Werkzeugschaft 24 zur Übertragung eines Drehmoments auf den vorderen Schneidabschnitt 26 des Bohrers 12 reibschlüssig im Presssitz drehfest gehalten. Zum Ausschrumpfen wird ebenfalls nur der Futterkörper 20 einseitig erwärmt, bis die thermische Ausdehnung den Bohrer 12 wieder zur Entnahme freigibt.

Der kreiszylindrische Funktionsring 14 lässt sich im ausgeschrumpften Zustand des Bohrers 12 auf den Werkzeugschaft 24 aufstecken und durch Verschieben positionieren, so dass die Länge des frei überstehenden Vorderabschnitts des Bohrers 12 einstellbar ist. Dabei sollte der Funktionsring 14 über das hintere Ende des Werkzeugschafts 24 aufgesteckt und ggf. auch abgezogen werden, um den Schneidabschnitt 26 nicht zu beschädigen. Zugleich sollte der an seiner Innenseite 28 reibschlüssig mit der Mantelfläche des Werkzeugschafts 24 in Eingriff stehende Funktionsring 14 im Innendurchmesser so dimensioniert sein, dass eine ungewollte Verstellung durch hinreichende Haftreibung vermieden wird.

Um den Funktionsring 14 bündig aufzunehmen, besitzt das Schrumpffutter 10 eine stirnseitig offene Ringausnehmung 30, welche den vorderen Endabschnitt der Aufnahmebohrung 22 radial erweitert. Im Ausgangszustand weist der Funktionsring 14 ein radiales Übermaß gegenüber der Ringausnehmung 30 auf, so neben dem Werkzeugschaft 24 auch eine Schrumpfbefestigung des Funktionsrings 14 im Futterkörper 20 möglich ist. Zusätzlich ist es denkbar, den Funktionsring 14 durch eine nicht gezeigte Formschlussverbindung in einer definierten Winkellage verdrehfest in der Ringausnehmung 30 zu fixieren. Dies kann z.B. durch eine axial oder radial eingreifende Nocke oder einen Paßstift erfolgen. Denkbar wäre auch eine von der Kreisform abweichende komplementäre Paßkontur der Ringausnehmung 30 und des Funktionsrings 14.

Wie auch aus Fig. 3 und 4 erkennbar, weist der Funktionsring 14 eine Mehrzahl von in seiner Umfangsrichtung verteilte Düsen 32 zum Durchleiten eines Mediums bzw. Fluids (Kühlschmierstoff) auf. Die Düsen 32 sind als Düsenschlitze an der Innenseite des Funktionsrings 14 offen und gehen axial durch dessen Wandung hindurch. Dabei erstrecken sich die Düsenschlitze 32 in radialer Richtung, so dass eine Restwand 34 des Funktionsrings 14 nach außen erhalten bleibt. Denkbar ist auch eine beliebige andere Ausrichtung einzelner oder aller Düsen 32, wobei jedenfalls eine mündungsseitige Ausrichtung zu dem Schneidabschnitt 26 des Bohrers 12 hin gegeben sein sollte. Die lichten Querschnitte der Düsen 32 können an das durchzuleitende Medium angepasst sein, um einen Ausstoß mit hoher Strömungsgeschwindigkeit zu erreichen; beispielsweise kann nur Luft, ein Flüssig-Luft-Gemisch oder auch nur eine Flüssigkeit durchgeleitet werden.

An ihrer axial inneren Eintrittsseite kommunizieren die Düsen 32 mit einem Ringraum 36, der sich im Futterkörper 20 als Stufenbohrungsabschnitt mit kleinerem Außendurchmesser an die Ringausnehmung 30 für den Düsenring 14 anschließt. Der Anschluss an eine maschinenseitige Medienversorgung erfolgt über den Hohlraum 18 des Hohlschaftkegels 16 und einen Versorgungskanal 38 in dem Futterkörper 20. Der Versorgungskanal 38 umfasst zwei Längsbohrungen 40, die einander diametral gegenüberliegen und über eine einseitig abgestopfte radiale Sackbohrung 42 mit einem Ringspalt am Schaftende des Bohrers 12 kommunizieren. Die Durchströmungsquerschnitte sind dabei so angepasst, dass ein hoher Mediendruck bis zum Ringraum 36 aufrechterhalten werden kann.

Wie vorstehend beschrieben, besitzt der Funktionsring 14 somit einen Mehrfachnutzen als Düsenring zur gezielten Kühlschmierstoffeindüsung auf das Werkzeug 12 und als Positionierring zur Voreinstellung der frei überstehenden Arbeitslänge des Werkzeugs 12 erfüllen, wobei jede Funktion wahlweise zur Verfügung steht. Sofern der Funktionsring 14 nicht benötigt wird, kann er auch von dem Bohrer 12 abgenommen werden, wobei die dann freibleibende Ringausnehmung 30 einen Kühlmittelaustritt in an sich bekannter Weise zulässt.

## Patentansprüche

1. Werkzeugkopf mit einem eine axiale Aufnahmebohrung (22) aufweisenden Schrumpffutter (10) und einem mit seinem zylindrischen Werkzeugschaft (24) in die am vorderen Stirnende des Schrumpffutters (10) offene Aufnahmebohrung (22) einsetzbaren und darin durch thermisches Schrumpfen des Schrumpffutters (10) fixierbaren Werkzeug (12), insbesondere Rotationswerkzeug wie Bohrer oder Fräser, **dadurch gekennzeichnet, dass** das Schrumpffutter (10) an seinem vorderen Stirnabschnitt eine die Aufnahmebohrung (22) radial erweiternde, stirnseitig offene Ringausnehmung (30) aufweist, und dass auf dem Werkzeugschaft (24) ein Funktionsring (14) positioniert ist, wobei im eingeschrumpften Zustand der Werkzeugschaft (24) in der Aufnahmebohrung (22) reibschlüssig fixiert ist und der Funktionsring (14) zumindest teilweise in der Ringausnehmung (30) sitzt.

2. Werkzeugkopf nach Anspruch 1, **dadurch gekennzeichnet, dass** der Funktionsring (14) an seiner Innenfläche reibschlüssig mit der Mantelfläche des Werkzeugschafts (24) in Eingriff steht.

3. Werkzeugkopf nach Anspruch 1 oder 2, **dadurch gekennzeichnet, dass** der Funktionsring (14) im ausgeschrumpften Ausgangszustand abnehmbar auf dem Werkzeugschaft (24) positioniert ist, wobei die axiale Position zur Längeneinstellung des frei überstehenden Vorderabschnitts des Werkzeugs (12) wählbar ist.

4. Werkzeugkopf nach einem der Ansprüche 1 bis 3, **dadurch gekennzeichnet, dass** der Funktionsring (14) im Ausgangszustand ein radiales Übermaß gegenüber der Ringausnehmung (30) aufweist.

5. Werkzeugkopf nach einem der Ansprüche 1 bis 4, **dadurch gekennzeichnet, dass** der Funktionsring (14) durch eine Formschlussverbindung in einer definierten Winkellage verdrehfest in der Ringausnehmung (30) fixiert ist.

6. Werkzeugkopf nach einem der Ansprüche 1 bis 5, **dadurch gekennzeichnet, dass** der Funktionsring (14) als Düsenring mit mindestens einer Düse (32) zum Beaufschlagen des Werkzeugs (12) mit Kühlschmierstoff ausgebildet ist.

7. Werkzeugkopf nach einem der Ansprüche 1 bis 6, **dadurch gekennzeichnet, dass** der Funktionsring (14) eine Mehrzahl von in Umfangsrichtung verteilte und in axialer Ringrichtung durchgehende Düsen (32) zur Durchleitung von Kühlschmierstoff aufweist.

8. Werkzeugkopf nach einem der Ansprüche 1 bis 7, **dadurch gekennzeichnet, dass** der Funktionsring (14) axial durchgehende, an seinem Innenmantel seitlich offene Düsenschlitze als Düsen (32) aufweist, wobei sich die Düsenschlitze in radialer Richtung oder unter einem Winkel schräg dazu nach außen erstrecken.

9. Werkzeugkopf nach einem der Ansprüche 1 bis 8, **dadurch gekennzeichnet, dass** die Ringausnehmung (30) einen durch den Funktionsring (14) nach vorne begrenzten freien Ringraum (36) zum Einleiten und Verteilen von Kühlschmierstoff aufweist.

10. Werkzeugkopf nach einem der Ansprüche 1 bis 9, **dadurch gekennzeichnet, dass** die Ringausnehmung (30) als nach vorne sich erweiternde Stufenbohrung ausgebildet ist, wobei der vordere Bohrungsabschnitt den Funktionsring (14) in seiner axialen Ausdehnung vollständig aufnimmt.

11. Werkzeugkopf nach einem der Ansprüche 1 bis 10, **dadurch gekennzeichnet, dass** das Schrumpffutter (10) einen von einem hinteren, in eine Maschinenspindel einspannbaren Spannabschnitt zu der Ringausnehmung (30) führenden Versorgungskanal (38) für Kühlschmierstoff aufweist.

12. Werkzeugkopf nach einem der Ansprüche 1 bis 11, **dadurch gekennzeichnet, dass** das Schrumpffutter (10) in einer den Werkzeugschaft (24) umschließenden Hülsenpartie mindestens eine Längsbohrung (40) zur Durchleitung von Kühlschmierstoff aufweist.

## Claims

1. A tool head, comprising a shrink-fit chuck (10), which has an axial receiving bore (22), and a tool (12), which is insertable with its cylindrical tool shank (24) into the receiving bore (22) that is open on the front end face of the shrink-fit chuck (10) and is fixable therein by thermal shrinkage of the shrink-fit chuck (10), in particular a rotary tool such as a drill or milling cutter, **characterized in that** the shrink-fit chuck (10) has on its front end face portion an annular recess (30), which radially widens the receiving bore (22) and is open at the front end, and **in that** a functional ring (14) is positioned on the tool shank (24), wherein, in the shrunken state, the tool shank (24) is frictionally fixed in the receiving bore (22) and the functional ring (14) sits at least partially in the annular recess (30).

2. The tool head as claimed in claim 1, **characterized in that** the functional ring (14), on its inner surface, is in frictional engagement with the shell surface of the tool shank (24).

3. The tool head as claimed in claim 1 or 2, **characterized in that** the functional ring (14), in the unshrunken initial state, is positioned removably on the tool shank (24), wherein the axial position can be chosen so as to set the length of the freely projecting front portion of the tool (12).

4. The tool head as claimed in one of claims 1 to 3, **characterized in that** functional ring (14), in the initial state, has a radial oversize in relation to the annular recess (30).

5. The tool head as claimed in one of claims 1 to 4, **characterized in that** the functional ring (14) is fixed by a positive connection in a rotationally secure manner in a defined angular position in the annular recess (30).

6. The tool head as claimed in one of claims 1 to 5, **characterized in that** the functional ring (14) is configured as a nozzle ring having at least one nozzle (32) for applying cooling lubricant to the tool (12).

7. The tool head as claimed in one of claims 1 to 6, **characterized in that** the functional ring (14) has a plurality of nozzles (32), which are distributed in the peripheral direction and are continuous in the axial ring direction, for the conveyance of cooling lubricant.

8. The tool head as claimed in one of claims 1 to 7, **characterized in that** the functional ring (14) has as the nozzles (32) axially continuous nozzle slots, which are laterally open on its inner jacket, wherein the nozzle slots extend outward in the radial direction, or at an angle inclined thereto.

9. The tool head as claimed in one of claims 1 to 8, **characterized in that** the annular recess (30) has a free annular space, bounded in the forward direction by the functional ring (14), for the introduction and distribution of cooling lubricant.

10. The tool head as claimed in one of claims 1 to 9, **characterized in that** the annular recess (30) is configured as a stepped bore which widens toward the front, wherein the front bore portion receives the functional ring (14) fully in its axial extent.

11. The tool head as claimed in one of claims 1 to 10, **characterized in that** the shrink-fit chuck (10) has a supply channel (38) for cooling lubricant, which supply channel leads from a rear clamping portion, which is clampable into a machine spindle, to the annular recess (30).

12. The tool head as claimed in one of claims 1 to 11, **characterized in that** shrink-fit chuck (10), in a sleeve portion enclosing the tool shank (24), has at least one longitudinal bore (40) for the conveyance of cooling lubricant.

## Revendications

1. Tête d'outil avec un mandrin de frettage (10) comportant un alésage de réception axial (22), et avec un outil (12), notamment un outil rotatif tel qu'un foret ou une fraise, pouvant être inséré par sa queue cylindrique (24) dans l'alésage de réception (22) ouvert à l'extrémité frontale avant du mandrin de frettage (10), et être fixé dans l'alésage par rétraction thermique du mandrin de frettage (10), **caractérisée en ce que** le mandrin de frettage (10) présente, au niveau de sa partie frontale avant, un évidement annulaire (30) ouvert du côté frontal, qui élargit radialement l'alésage de réception (22), et **en ce qu'**une bague fonctionnelle (14) est positionnée sur la queue d'outil (24), sachant qu'à l'état serré, la queue d'outil (24) est fixée dans l'alésage de réception (22) par friction et la bague fonctionnelle (14) est logée au moins partiellement dans l'évidement annulaire (30).

2. Tête d'outil selon la revendication 1, **caractérisée en ce que** la bague fonctionnelle (14) est engagée par friction à sa surface intérieure avec la surface d'enveloppe de la queue d'outil (24).

3. Tête d'outil selon la revendication 1 ou 2, **caractérisée en ce qu'**à l'état initial desserré, la bague fonctionnelle (14) est positionnée de manière amovible sur la queue d'outil (24), avec possibilité de choisir la position axiale de réglage de longueur de la partie avant libre qui dépasse l'outil (12).

4. Tête d'outil selon l'une des revendications 1 à 3, **caractérisée en ce qu'**à l'état initial, la bague fonctionnelle (14) est radialement surdimensionnée par rapport à l'évidement annulaire (30).

5. Tête d'outil selon l'une des revendications 1 à 4, **caractérisée en ce que** la bague fonctionnelle (14) est fixée dans l'évidement annulaire (30), sans rotation possible, dans une position angulaire définie, grâce à une liaison par complémentarité de forme.

6. Tête d'outil selon l'une des revendications 1 à 5, **caractérisée en ce que** la bague fonctionnelle (14) se présente sous forme de bague de buse comprenant au moins une buse (32) pour alimenter l'outil (12) en lubrifiant réfrigérant.

7. Tête d'outil selon l'une des revendications 1 à 6, **caractérisée en ce que** la bague fonctionnelle (14) présente une pluralité de buses (32) réparties dans le sens circonférentiel et traversantes dans le sens axial de la bague, pour le passage d'un lubrifiant réfrigérant.

8. Tête d'outil selon l'une des revendications 1 à 7, **caractérisée en ce que** la bague fonctionnelle (14) présente, comme buses (32), des fentes de buses axialement traversantes, ouvertes sur le côté au niveau de l'enveloppe intérieure de la bague, lesdites fentes de buses s'étendant vers l'extérieur dans le sens radial ou sous un angle obliquement à celuici.

9. Tête d'outil selon l'une des revendications 1 à 8, **caractérisée en ce que** l'évidement annulaire (30) présente un espace annulaire libre (36) limité vers l'avant par la bague fonctionnelle (14), pour introduire et distribuer un lubrifiant réfrigérant.

10. Tête d'outil selon l'une des revendications 1 à 9, **caractérisée en ce que** l'évidement annulaire (30) se présente sous forme d'alésage étagé s'élargissant vers l'avant, la partie avant de l'alésage recevant entièrement la bague fonctionnelle (14) sur son étendue axiale.

11. Tête d'outil selon l'une des revendications 1 à 10, **caractérisée en ce que** le mandrin de frettage (10) présente un canal d'alimentation (38) pour un lubrifiant réfrigérant, menant depuis un tronçon de serrage arrière pouvant être serré dans une broche de machine jusqu'à l'évidement annulaire (30).

12. Tête d'outil selon l'une des revendications 1 à 11, **caractérisée en ce que** le mandrin de frettage (10) présente, dans une partie de douille entourant la queue d'outil (24), au moins un alésage longitudinal (40) pour le passage d'un lubrifiant réfrigérant.
